# EUROPÄISCHE PATENTSCHRIFT

(11) **EP 2 790 967 B1**
(45) Veröffentlichungstag und Bekanntmachung des Hinweises auf die Patenterteilung: **25.12.2019**
(21) Anmeldenummer: 12812922.8
(22) Anmeldetag: 17.12.2012
(51) Int. Cl.: B60R 13/02

(54) **SYSTEM AUS DACHHIMMEL UND KASSETTE**
SYSTEM INCLUDING ROOF LINER AND CATRIDGE
SYSTÈME INCLUANT GARNITURE DE TOIT ET CARTOUCHE

(30) Priorität: 16.12.2011 DE 102011121178
(43) Veröffentlichungstag der Anmeldung: 22.10.2014
(73) Patentinhaber: Mailänder, Ralf, 9357 Bettendorf (LU)
(72) Erfinder: MAILAENDER, Ralf, L-9357 Bettendorf (LU)
(74) Vertreter: Patentanwälte Bernhardt / Wolff Partnerschaft mbB
(86) Internationale Anmeldenummer: PCT/EP2012/075753
(87) Internationale Veröffentlichungsnummer: WO 2013/087923

(56) Entgegenhaltungen:
- WO-A1-2010/010733
- DE-A1-102008 051 705
- DE-A1-102008 060 678
- US-A1- 2009 309 392

## Beschreibung

Die vorliegende Erfindung betrifft ein System aus einem Dachhimmel und einer Kassette sowie ein Verfahren zur Herstellung des Dachhimmels und ein Verfahren zur Befestigung eines Dachhimmels an einer Kassette, insbesondere einer Schiebedachkassette.

Dachhimmel als Innenverkleidungsteile von Fahrzeugdächern werden für jedes Fahrzeug in verschiedenen Varianten hergestellt. Neben dem sogenannten Volldach- oder Normaldachhimmel, der die komplett darüber liegende Dachinnenseite vollständig verkleidet, existieren auch Varianten mit einem oder mehreren Dachöffnungen. Diese z. B. mit Schiebe- oder Panoramadach angebotenen Varianten müssen im Verbindungsbereich zu der in der Regel dahinter befindlichen Kassette, beispielsweise Schiebedachkassette, einen ästhetischen Abschluss bilden und fest mit dieser Einheit verbunden sein. Dabei ist es die Bestrebung des Fachmanns, diese Verbindung möglichst einfach und möglichst haltbar zu gestalten.

Es war deshalb die Aufgabe der vorliegenden Erfindung, ein System bestehend aus einem Dachhimmel mit einer Dachöffnung und einer Kassette zur Verfügung zu stellen, das einfach herzustellen und zu montieren ist.

Gelöst wird die Aufgabe mit einem System mit einem Dachhimmel, der im Bereich einer Dachöffnung einen Rand aufweist, der umlaufend mit einer vom Fahrgastraum weggezogenen Ausformung und daran anschließend mit einem Umbug, beispielweise einem Flansch, versehen ist und einer Kassette, die zumindest abschnittsweise eine Auflage, insbesondere eine Auflagelasche, aufweist, auf der der Umbug des Dachhimmels aufliegt, wobei die Auflage mit der Kassette einen Schlitz bildet, der den Umbug des Dachhimmels zumindest abschnittsweise aufnimmt.

Die vorliegende Erfindung betrifft ein System aus einem Dachhimmel und einer Kassette. Der Dachhimmel besteht vorzugsweise aus einem Trägermaterial sowie einem Dekormaterial. Erfindungsgemäß weist der Dachhimmel eine Dachöffnung auf, in deren Randbereich er mit einer vom Fahrgastraum weggezogenen, d. h. vom Innenraum des Fahrzeuges weg gerichteten, Ausformung versehen ist. An diese Ausformung schließt sich ein Umbug an. Dieser Umbug kann einen beliebigen Winkel zu der vom Fahrgastraum weggezogenen Ausformung aufweisen. Vorzugsweise ist der Umbug jedoch in einem Winkel zwischen 80° und 180° zu der höher gezogenen Ausformung vorgesehen. Ganz besonders bevorzugt beträgt der Winkel 90° oder 180°. Der Umbug kann sich über den gesamten Umfang der Dachöffnung erstrecken oder nur abschnittsweise vorgesehen sein.

Gemäß der vorliegenden Erfindung weist der Dachhimmel in dem Umbug eine oder mehrere Ausnehmung auf, die jeweils einen Vorsprung, der an der Kassette und/oder der Auflage vorgesehen ist, aufnehmen. Zusätzlich können an dem Umbug ein oder mehrere Form- und/oder Kraftschlussmittel vorgesehen sein.

Vorzugsweise ist der Dachhimmel mit einer Kassette, insbesondere einer Schiebedachkassette, an der Karosserie eines Fahrzeuges, besonders bevorzugt lösbar, angebracht. Vorzugsweise ist nun vorgesehen, dass die Kassette eine Auflage, insbesondere eine Auflagelasche aufweist, auf der der Dachhimmel aufliegt. Diese Auflage kann sich über den gesamten inneren Umfang der Kassette oder nur abschnittsweise erstrecken. Vorzugsweise ist die Auflage auf zwei gegenüberliegenden Seiten einer im Wesentlichen rechteckförmigen Kassette vorgesehen. Die Auflage kann eine oder mehrere Ausnehmung(en), Einbuchtung(en) und/oder Ausbuchtung(en) aufweisen, die jeweils form- und/oder kraftschlüssig mit dem Umbug des Dachhimmels zusammenwirken.

Vorzugsweise ist die Auflage mit der Kassette einstückig ausgeführt. Beispielweise wird die Kassette strangextrudiert, wobei die Auflage an die Kassette angeformt ist.

Weiterhin erfindungsgemäß bilden die Kassette und die Auflage einen Schlitz, der den Umbug des Dachhimmels zumindest abschnittsweise aufnimmt. Die Breite dieses Schlitzes kann größer, gleich oder kleiner ausgelegt sein als die Dicke des Umbugs. Im letzten Fall ist der Umbug dann in dem Schlitz geklemmt. Die Breite des Schlitzes kann sich insbesondere in Einführrichtung des Umbugs des Dachhimmels verändern. Beispielsweise ist die Breite des Schlitzes anfänglich, bezogen auf die Einsteckrichtung des Umbugs, größer vorgesehen, um das Einführen des Umbugs in den Schlitz zu erleichtern, und vermindert sich dann, beispielweise um den Umbug beim weiteren Einführen in den Schlitz zu klemmen oder das Spiel zwischen Schlitz und Umbug zu vermindern. Es ist jedoch auch möglich, dass sich der Schlitz in Einsteckrichtung erweitert. Vorzugsweise wird der Eingang beim Einstecken des Umbugs, insbesondere elastisch, aufgeweitet.

Gemäß einer anderen bevorzugten Ausführungsform weist der Umbug ein Form- und/oder Kraftschlussmittel, insbesondere einstückig, auf, das mit einer Ausnehmung in der Kassette, insbesondere der Schiebedachkassette, oder der Auflage zusammenwirkt. Vorzugsweise wirkt das Form- und/oder Kraftschlussmittel rastend mit der Ausnehmung zusammen. Vorzugsweise ist das Form- und/oder Kraftschlussmittel eine Ausformung, die vorzugsweise in den Dachhimmel eingeformt ist.

Ein weiterer Gegenstand der vorliegenden Erfindung ist ein Verfahren zur Herstellung eines Dachhimmels, bei dem im Bereich des Randes einer Ausnehmung des Dachhimmels umlaufend eine höher gezogene Ausformung und daran anschließend ein Umbug durch Umformen vorgesehen wird, wobei in den Umbug eine oder mehrere Ausnehmung(en) eingearbeitet wird/werden.

Vorzugsweise wird die Ausnehmung eingearbeitet, beispielsweise mittels Wasserstrahl oder Laserstrahl geschnitten oder gestanzt, bevor der Umbug in seine abschließende Lage gebracht wird.

Besonders bevorzugt wird der Umbug beschnitten, bevor er in seine abschließende Lage gebracht wird. Vorzugsweise erfolgen das Einbringen der Ausnehmung und das Beschneiden im Wesentlichen im gleichen Arbeitsgang, besonders bevorzugt gleichzeitig.

Der Umbug kann mit der höher gezogenen Ausformung, beispielsweise stoffschlüssig, verbunden werden. Im Wesentlichen wird der Umbug durch plastische Verformung in seine abschließende Lage gebracht. Vorzugsweise liegt der Umbug nach der Verformung nicht oder nicht vollständig an der höher gezogenen Ausformung an und kann bei der Montage des Dachhimmels an der Kassette, insbesondere elastisch, in Richtung der höher gezogenen Ausformung gebogen werden. Dadurch entsteht eine Vorspannung, die einem selbsttätigen Lösen des Dachhimmels von der Kassette entgegenwirkt.

Die Verformung des Materials, aus dem der Dachhimmel gefertigt ist, erfolgt vorzugsweise unter Druck- und/oder Temperatureinfluss.

Vorzugsweise wird die Ausnehmung nur abschnittsweise im Bereich des Umbugs vorgesehen. Besonders bevorzugt weist der Umbug eine Mehrzahl von Ausnehmungen auf, die vorzugsweise zumindest teilweise äquidistant zueinander angeordnet sind.

Alternativ oder ergänzend zu diesen Aussparungen, die insbesondere mit Rastmitteln zusammenwirken, kann der Umbug Einprägungen, beispielsweise im Formprozess des Dachhimmels erhalten, die beispielsweise mit formschlüssig ausgeformten Rastmitteln der Schiebedachkassette ein ungewolltes Herausrutschen der Umbuglasche verhindert. Diese Einprägungen können auch zusätzlich zu der Kombination aus Aussparungen und Rastmitteln verwendet werden.

Die Kräfte, die das Herausrutschen des Formhimmels aus der schlitzförmigen Aufnahme bewirken, können zum Beispiel durch Drücken auf die Oberkante des Formhimmels oder durch Ziehen an dieser Kante auftreten.

Noch ein weiterer Gegenstand der vorliegenden Erfindung ist ein Verfahren zur Befestigung des Dachhimmels an einer Kassette, insbesondere einer Schiebedachkassette, bei dem der Umbug zumindest teilweise in die Kassette eingeführt wird und dabei der Umbug in den Schlitz zwischen Kassette und Auflage eindringt.

Vorzugsweise verformt sich der Dachhimmel, insbesondere der Umbug, elastisch während der Einführung des Umbugs in die Kassette. Diese elastische Verformung bildet sich, vorzugsweise nur teilweise zurück, ganz besonders bevorzugt vollständig zurück, wenn der Umbug zumindest teilweise in den Schlitz eingedrungen ist. Vorzugsweise wird der Dachhimmel von unten in die Kassette eingeschoben, bis der Umbug oberhalb der Auflage angeordnet ist und danach wieder nach unten bewegt. Bei der Abwärtsbewegung dringt der Umbug dann weiter in den Schlitz zwischen Kassette und Auflage ein.

Im Folgenden werden die Erfindungen anhand der Figuren 1 - 4c erläutert. Diese Erläuterungen sind lediglich beispielhaft und schränken den allgemeinen Erfindungsgedanken nicht ein. Die Beschreibung gilt für alle Gegenstände der vorliegenden Erfindung gleichermaßen.
- **Figuren 1 und 2**: zeigen das erfindungsgemäße System.
- **Figuren 3a - c**: zeigen die Herstellung des Dachhimmels.
- **Figuren 4a - c**: zeigen die Montage des Dachhimmels an der Dachkassette.

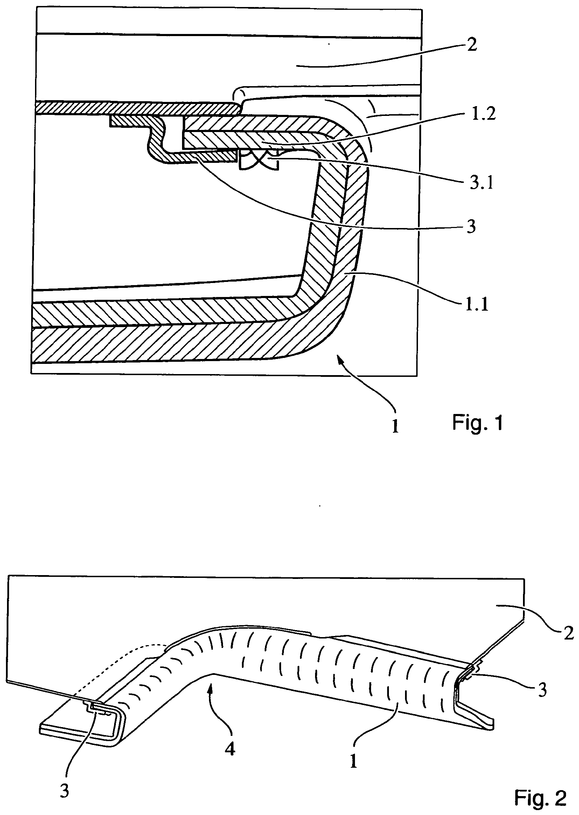

Figuren 1 und 2 zeigen das erfindungsgemäße System bestehend aus einem Dachhimmel 1 und einer Kassette 2, insbesondere einer Schiebedachkassette. Der Dachimmel besteht vorzugsweise aus einem Trägermaterial und einem Dekormaterial, das dem Fahrgastinnenraum zugewandt ist. Der Dachhimmel 1 weist im Bereich einer Öffnung, die beispielsweise für ein Schiebedach oder ein Panoramadach vorgesehen wird, eine erste höher gezogene Ausformung 1.1 auf, an der sich ein Umbug 1.2 anschließt. Die Ausformung 1.1 ist in dem vorliegenden Fall umlaufend um die Öffnung vorgesehen. Der Umbug 1.2 ist vorzugsweise ebenfalls umlaufend um die Ausformung vorgesehen, zumindest erstreckt er sich jedoch überwiegend an den geraden Kanten der Öffnung. An den Ecken der Aussparung kann auch ein Übergang zu einem stoffschlüssigen 180°-Umbug erfolgen. Dies ist abhängig vom Radius der Ecke, der Dehnfähigkeit des Dekors und der lokalen Masse des Trägermaterials. An der Kassette 2 des erfindungsgemäßen Systems ist vorzugsweise einstückig eine Auflage 3 so vorgesehen, dass zwischen der Unterseite der Kassette 1 und der Oberseite der Auflage 3 ein Schlitz entsteht, in den der Umbug 1.2 bei der Montage des Dachhimmels an der Kassette eingefügt wird. Vorzugsweise ist der Schlitz so dimensioniert, dass er, zumindest abschnittsweise, den Umbug 1.2 klemmt. Dafür kann die Auflage 3 z. B. ein Form- und/oder Kraftschlussmittel aufweisen, das mit dem Dachhimmel zusammenwirkt. Alternativ oder zusätzlich kann die Auflage 3 in Richtung des Umbugs elastisch vorgespannt sein, indem beispielsweise die Breite des Schlitzes zumindest teilweise kleiner ist als die Dicke des Umbugs 1.2. Die Auflage 3 kann um die gesamte Kassette umlaufend oder nur abschnittsweise vorgesehen sein. Vorzugsweise ist die Auflage jeweils auf gegenüberliegenden Seiten einer beispielsweise quadratisch oder rechteckig geformten Kassette angeordnet.

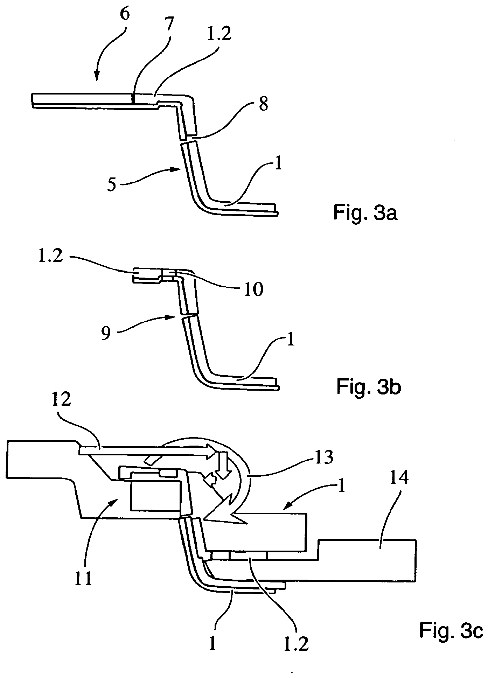

Figuren 3a - c zeigen die Herstellung eines Umbugs. Zunächst wird, wie in Figur 3a dargestellt, der Randbereich der Ausnehmung in dem Dachhimmel 1 geformt. Dieses Formen erfolgt vorzugsweise unter Druck- und/oder Temperatureinfluss. Sodann wird, wie ebenfalls dargestellt, der Dachhimmel entlang der Schnittkante 7 umlaufend beschnitten, wobei Abfall 6 entsteht. Gleichzeitig oder danach wird in den Umbug 1.2 die Ausnehmung 10, beispielsweise durch den Beschnitt mittels Wasserstrahl oder Laser oder Stanzen, eingebracht. Für den Umbug wird das Umbugwerkzeug 11, wie durch die Pfeile 12 dargestellt, bewegt. Diese Bewegung resultiert in einer im Wesentlichen kreisförmigen Bewegung des Umbugs 1.2 hier um die Umbuglinie 8, wie durch den Pfeil 13 dargestellt.

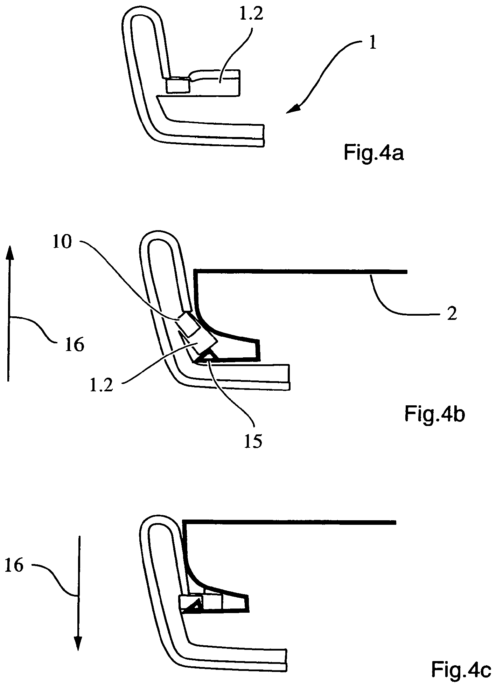

Gegebenenfalls kann noch ein Niederhalter 14 eingesetzt werden, um den Umbug zu unterstützen. Das in den Figuren 3a - c dargestellte Verformen des Dachhimmels erfolgt vorzugsweise zumindest in Teilbereichen plastisch, so dass der Umbug nach dem Entfernen der Werkzeuge in der in Figur 4a dargestellten Stellung verbleibt.

In den Figuren 4a - c ist die Verbindung zwischen dem Dachhimmel 1 und der Dachkassette 2 dargestellt. Für diese Verbindung wird der Dachhimmel von unten in die Dachkassette soweit eingeführt, bis sich der Umbug 1.2 zumindest teilweise oberhalb des Schlitzes in der Dachkassette 2 oder oberhalb der Auflage 3 befindet, was in Figur 4b durch den Pfeil 16 symbolisiert ist. Sodann wird der Dachhimmel in die entgegengesetzte Richtung, wie in Figur 4c durch Pfeil 16 dargestellt, bewegt. Dabei wird der vordere Abschnitt des Umbugs 1.2 in den Schlitz soweit eingeschoben, bis die Ausnehmung 10 des Umbugs mit einem Rastmittel 15, das an der Auflage 3 der Kassette vorgesehen ist, rastend zusammenwirkt.

### Bezugszeichenliste

- 1: Dachhimmel
- 1.1: höher gezogene Ausformung, vom Fahrgastraum weggezogene Ausformung
- 1.2: Umbug, Befestigungsflansch
- 2: Kassette, Schiebedachkassette
- 3: Auflage, Auflagelasche
- 3.1: Form- und/oder Kraftschlussmittel, Klemmittel
- 4: Eckbereich
- 5: Schiebedachausformung
- 6: Abfall nach Beschnitt
- 7: Schnittkante
- 8: Umbuglinie
- 9: Umbugbereich
- 10: Ausnehmung
- 11: Umbugwerkzeug
- 12: Bewegung des Werkzeugs
- 13: Bewegung des Umbugbereichs 9
- 14: Niederhalter
- 15: Formschlussmitttel, Rastnase
- 16: Montagebewegung

## Patentansprüche

1. Dachsystem für ein Fahrzeug mit einem Dachhimmel (1), der in dem Bereich einer Dachöffnung anbringbar ist und einen Rand aufweist, der umlaufend mit einer vom Fahrgastraum weggezogenen Ausformung (1.1) und daran anschließend mit einem Umbug (1.2), beispielsweise einem Flansch, versehen ist und einer Kassette (2), die zumindest abschnittsweise eine Auflage (3), insbesondere eine Auflagelasche, aufweist, auf der der Umbug des Dachhimmels aufliegt, **dadurch gekennzeichnet, dass** die Auflage (3) mit der Kassette (2) einen Schlitz bildet, der den Umbug (1 .2) des Dachhimmels zumindest abschnittsweise aufnimmt, und dass der Dachhimmel in dem Umbug eine oder mehrere Ausnehmungen (10) aufweist, die jeweils einen Vorsprung, der an der Kassette und/oder der Auflage vorgesehen ist, aufnehmen.

2. System nach Anspruch 1, **dadurch gekennzeichnet, dass** an dem Umbug ein oder mehrere Form- und/oder Kraftschlussmittel vorgesehen sind.

3. System nach Anspruch 1 oder 2, **dadurch gekennzeichnet, dass** die Auflage auf zwei gegenüberliegenden Seiten einer im Wesentlichen rechteckförmigen Kassette vorgesehen ist; und/oder
dass die Auflage eine oder mehrere Ausnehmung(en), Einbuchtung(en) und/oder Ausbuchtung(en) aufweist, die jeweils form- und/oder kraftschlüssig mit dem Umbug des Dachhimmels zusammenwirken.

4. System nach einem der voranstehenden Ansprüche, **dadurch gekennzeichnet, dass** die Auflage mit der Kassette einstückig ausgeführt ist, wobei die Kassette vorzugsweise strangextrudiert und die Auflage an die Kassette angeformt ist.

5. System nach einem der voranstehenden Ansprüche, **dadurch gekennzeichnet, dass** die Breite des Schlitzes anfänglich, bezogen auf die Einsteckrichtung des Umbugs, größer vorgesehen ist.

6. System nach einem der voranstehenden Ansprüche, **dadurch gekennzeichnet, dass** der Umbug ein Form- und/oder Kraftschlussmittel, insbesondere einstückig, aufweist, das mit einer Ausnehmung in der Kassette, insbesondere der Schiebedachkassette, oder der Auflage zusammenwirkt.

7. Verfahren zur Herstellung eines Dachhimmels, bei dem im Bereich des Randes einer Ausnehmung des Dachhimmels umlaufend eine höher gezogene Ausformung und daran anschließend ein Umbug durch Umformen vorgesehen wird, **dadurch gekennzeichnet, dass** in den Umbug eine oder mehrere Ausnehmung(en) eingearbeitet wird/werden.

8. Verfahren nach Anspruch 7, **dadurch gekennzeichnet, dass** die Ausnehmung eingearbeitet, beispielsweise geschnitten oder gestanzt wird, bevor der Umbug in seine abschließende Lage gebracht wird.

9. Verfahren nach Anspruch 7 oder 8, **dadurch gekennzeichnet, dass** der Umbug beschnitten wird, bevor er in seine abschließende Lage gebracht wird, wobei das Einbringen der Ausnehmung und das Beschneiden vorzugsweise im Wesentlichen im gleichen Arbeitsgang erfolgten.

10. Verfahren nach einem der Ansprüche 7 bis 9, **dadurch gekennzeichnet, dass** die Ausnehmung nur abschnittsweise im Bereich des Umbugs vorgesehen wird.

11. Verfahren nach einem der Ansprüche 7 bis 10, **dadurch gekennzeichnet, dass** der Umbug eine Mehrzahl von Ausnehmungen aufweist, die vorzugsweise zumindest teilweise äquidistant zueinander angeordnet werden.

12. Verfahren nach einem der Ansprüche 7 bis 11, **dadurch gekennzeichnet, dass** an dem Umbug mindestens eine Einformung vorgesehen wird, die vorzugsweise form- und/oder kraftschlüssig mit der Kassette und/oder der Auflage zusammenwirkt.

13. Verfahren zur Befestigung des Dachhimmels an einer Kassette, insbesondere einer Schiebedachkassette, in einem System nach einem der Ansprüche 1 bis 8, **dadurch gekennzeichnet, dass** der Umbug zumindest teilweise in die Kassette eingeführt wird und dabei der Umbug in den Schlitz zwischen Kassette und Auflage eindringt und die Vorsprüngen von den Ausnehmungen (10) aufgenommen werden.

14. Verfahren nach Anspruch 13, **dadurch gekennzeichnet, dass** sich der Dachhimmel, insbesondere der Umbug, während der Einführung des Umbugs in die Kassette elastisch verformt, wobei sich diese elastische Verformung vorzugsweise zumindest teilweise, bevorzugt vollständig zurückbildet, wenn der Umbug zumindest teilweise in den Schlitz eingedrungen ist.

15. Verfahren nach Anspruch 13 oder 14, **dadurch gekennzeichnet, dass** der Dachhimmel von unten in die Kassette eingeschoben wird, bis der Umbug oberhalb der Auflage angeordnet ist und danach wieder nach unten bewegt wird, wobei der Abwärtsbewegung der Umbug vorzugsweise dann weiter in den Schlitz zwischen Kassette und Auflage eindringt.

## Claims

1. Roof system for a vehicle having a roof liner (1) which can be attached in the region of a roof opening and has an edge which is provided peripherally with a shaped-out formation (1.1) which is drawn away from the passenger compartment and, adjoining said shaped-out formation, with an edge rim (1.2), for example a flange, and having a cartridge (2) which has a support (3), in particular a support lug, at least in sections, on which support (3) the edge rim of the roof liner lies, **characterized in that** the support (3) forms a slot with the cartridge (2), which slot receives the edge rim (1.2) of the roof liner at least in sections, and **in that** the roof liner has one or more recesses (10) in the edge rim, which one or more recesses (10) receives/receive in each case one projection which is provided on the cartridge and/or the support.

2. System according to Claim 1, **characterized in that** one or more positively locking and/or non-positive means is/are provided on the edge rim.

3. System according to Claim 1 or 2, **characterized in that** the support is provided on two opposite sides of a substantially rectangular cartridge; and/or **in that** the support has one or more recesses, indentations and/or bulges which interact in each case in a positively locking and/or non-positive manner with the edge rim of the roof liner.

4. System according to one of the preceding claims, **characterized in that** the support is configured in one piece with the cartridge, the cartridge preferably being extruded and the support being integrally formed onto the cartridge.

5. System according to one of the preceding claims, **characterized in that** the width of the slot is provided to be larger initially, in relation to the plug-in direction of the edge rim.

6. System according to one of the preceding claims, **characterized in that** the edge rim has a positively locking and/or non-positive means, in particular in one piece, which means interacts with a recess in the cartridge, in particular the sunroof cartridge, or the support.

7. Method for producing a roof liner, in the case of which roof liner a shaped-out formation which is drawn up higher and, adjoining the latter, an edge rim are provided peripherally in the region of the edge of a recess of the roof liner by way of forming, **characterized in that** one or more recesses is/are made in the edge rim.

8. Method according to Claim 7, **characterized in that** the recess is machined, for example, cut or punched, before the edge rim is moved into its final position.

9. Method according to Claim 7 or 8, **characterized in that** the edge rim is trimmed before it is moved into its final position, the making of the recess and the trimming preferably having taken place substantially in the same work operation.

10. Method according to one of Claims 7 to 9, **characterized in that** the recess is provided in the region of the edge rim merely in sections.

11. Method according to one of Claims 7 to 10, **characterized in that** the edge rim has a plurality of recesses which are preferably arranged at least partially equidistantly with respect to one another.

12. Method according to one of Claims 7 to 11, **characterized in that** at least one formed recess is provided on the edge rim, which formed recess preferably interacts in a positively locking and/or non-positive manner with the cartridge and/or the support.

13. Method for fastening the roof liner to a cartridge, in particular a sunroof cartridge, in a system according to one of Claims 1 to 8, **characterized in that** the edge rim is introduced at least partially into the cartridge, and the edge rim penetrates in the process into the slot between the cartridge and the support, and the projections are received by the recesses (10).

14. Method according to Claim 13, **characterized in that** the roof liner, in particular the edge rim, is deformed elastically during the introduction of the edge rim into the cartridge, the said elastic deformation preferably reverting back to its original shape at least partially, with preference completely, when the edge rim has penetrated at least partially into the slot.

15. Method according to Claim 13 or 14, **characterized in that** the roof liner is pushed from below into the cartridge until the edge rim is arranged above the support and is afterwards moved downwards again, the edge rim, during the downward movement, preferably then penetrating further into the slot between the cartridge and the support.

## Revendications

1. Système de toit pour un véhicule, comportant un pavillon (1) qui peut être monté dans la zone d'une ouverture de toit et qui présente un bord qui est pourvu circonférentiellement d'une conformation (1.1) partant de l'habitacle et suivie d'un repli (1.2), par exemple d'une bride, et une cassette (2) qui présente au moins localement un support (3), en particulier une patte support, sur laquelle repose le repli du pavillon,
**caractérisé en ce que**
le support (3) forme, conjointement avec la cassette, une fente qui reçoit au moins localement le repli (1.2) du pavillon, et **en ce que**
le pavillon présente un ou plusieurs évidements (10) dans le repli, qui reçoivent chacun une saillie prévue sur la cassette et/ou sur le support.

2. Système selon la revendication 1,
**caractérisé en ce que**
un ou plusieurs moyens de coopération de forme et/ou de force sont prévus au niveau du repli.

3. Système selon la revendication 1 ou 2,
**caractérisé en ce que**
le support est prévu sur deux côtés opposés d'une cassette sensiblement rectangulaire ; et/ou **en ce que**
le support présente un ou plusieurs évidements, renfoncements et/ou renflements qui coopèrent chacun par coopération de forme et/ou de force avec le repli du pavillon.

4. Système selon l'une des revendications précédentes,
**caractérisé en ce que**
le support est réalisé d'un seul tenant avec la cassette, la cassette étant de préférence extrudée et le support étant conformé sur la cassette.

5. Système selon l'une des revendications précédentes,
**caractérisé en ce que**
la largeur de la fente est prévue plus grande au début par rapport à la direction d'enfichage du repli.

6. Système selon l'une des revendications précédentes,
**caractérisé en ce que**
le repli comprend un moyen de coopération de forme et/ou de force, en particulier d'un seul tenant, qui coopère avec un évidement dans la cassette, en particulier dans la cassette de toit coulissant, ou dans le support.

7. Procédé pour réaliser un pavillon, dans lequel on prévoit une conformation tirée vers le haut circonférentiellement au niveau du bord d'un évidement du pavillon, suivie d'un repli réalisé par mise en forme,
**caractérisé en ce que**
un ou plusieurs évidement(s) est/sont ménagé(s) dans le repli.

8. Procédé selon la revendication 7,
**caractérisé en ce que**
l'évidement est ménagé par exemple par coupe ou par poinçonnage avant de mettre le repli dans sa position définitive.

9. Procédé selon la revendication 7 ou 8,
**caractérisé en ce que**
le repli est taillé avant de le mettre dans sa position définitive, la réalisation de l'évidement et l'opération de taille s'effectuant de préférence dans la même passe de travail.

10. Procédé selon l'une des revendications 7 à 9,
**caractérisé en ce que**
l'évidement n'est prévu que localement au niveau du repli.

11. Procédé selon l'une des revendications 7 à 10,
**caractérisé en ce que**
le repli présente une pluralité d'évidements qui sont disposés de préférence au moins partiellement de façon équidistante les uns par rapport aux autres.

12. Procédé selon l'une des revendications 7 à 11,
**caractérisé en ce que**
on prévoit au moins un creux sur le repli, qui coopère de préférence par coopération de forme et/ou de force avec la cassette et/ou avec le support.

13. Procédé pour fixer le pavillon sur une cassette, en particulier sur une cassette de toit coulissant, dans un système selon l'une des revendications 1 à 8,
**caractérisé en ce que**
le repli est introduit au moins partiellement dans la cassette et le repli pénètre dans la fente entre la cassette et le support, et les saillies sont reçues par les évidements (10).

14. Procédé selon la revendication 13,
**caractérisé en ce que**
le pavillon, en particulier le repli, est déformé élastiquement pendant l'introduction du repli dans la cassette, et ladite déformation élastique s'annule de préférence au moins partiellement, de préférence complètement, lorsque le repli a pénétré au moins partiellement dans la fente.

15. Procédé selon la revendication 13 ou 14,
**caractérisé en ce que**
le pavillon est inséré depuis le bas dans la cassette jusqu'à ce que le repli soit disposé au-dessus du support, et ensuite il est déplacé à nouveau vers le bas, et lors du mouvement descendant du repli il pénètre alors de préférence davantage dans la fente entre la cassette et le support.
